Europäisches Patentamt

European Patent Office

Office européen des brevets

(19)

(11) Publication number: **0 002 876**
**B1**

(12) **EUROPEAN PATENT SPECIFICATION**

(45) Date of publication of patent specification: **03.02.82**

(51) Int. Cl.³: **C 04 B 13/12, C 04 B 15/12**

(21) Application number: **78200397.4**

(22) Date of filing: **29.12.78**

(54) Method of producing hydrothermally hardened products.

(30) Priority: **30.12.77 NL 7714619**

(43) Date of publication of application:
**11.07.79 Bulletin 79/14**

(45) Publication of the grant of the European patent:
**03.02.82 Bulletin 82/5**

(84) Designated Contracting States:
**BE CH DE FR GB IT LU SE**

(56) References cited:
**DE - A - 2 252 125**
**FR - A - 1 538 714**
**GB - A - 1 388 556**
**NL - A - 76 05527**
**US - A - 3 634 567**

(73) Proprietor: **Aarding Weerstandlas B.V.**
**70 Industrieweg**
**Nunspeet (NL)**

(72) Inventor: **Loggers, Hendrik**
**37 Prinses Beatrixlaan**
**NL-3958 XJ Amerongen (NL)**
Inventor: **Versteeg, Gijsbert**
**55 Stationslaan**
**NL-8071 CK Nunspeet (NL)**

(74) Representative: **van der Veken, Johannes Adriaan et al,**
**EXTERPATENT Postbus 90649 Willem Witsenplein 3 & 4**
**NL-2509 LP 's-Gravenhage (NL)**

Courier Press, Leamington Spa, England.

# 0 002 876

## Method of producing hydrothermally hardened products

The invention relates to a method of producing hydrothermally cured products, by reaction of a calcium oxide containing substance and a silica containing product, whether or not in the presence of a filler, by heating under steam pressure in an autoclave, in three steps, the pressure in the second step being lower than in the first step.

Such a method is known from FR—A—1538714 wherein a mixture of silica and lime is first prehardened by steam under pressure whereafter the steam pressure is reduced and subsequently the product after moulding is subjected to a steam treatment for the endhardening of the product.

This method presents the disadvantage that if it is applied to hardening granules the surface of the final granules shows a lot of cracks. These cracks are not allowed in granules which have to be used as a substitute for gravel in concrete. In this respect it should be noted that in near future there will be a shortage of genuine or natural gravel due to environmental rules forbidding dredging of natural gravel.

It is now the aim of the invention to provide a method which overcomes these disadvantages.

This aim is obtained in that in a first step the steam pressure in an autoclave is increased up to at most 193 kPa, whereupon in a second step the product is maintained in a moist atmosphere at a lower pressure than in the first step and subsequently in the last step the steam pressure is increased up to a steam pressure up to more than 203 kPa.

In this way a substantially crack free end product is obtained which forms an excellent substitute for natural gravel.

It should be noted that from US—A—3634567 it is known to cure hydraulic setting calcareous cement silica containing compositions, comprising a steam treatment in two steps the pressure in the last step being higher than in the first step. However, this process does not use an intermediate step in which the pressure is lower than in the preceding and in the subsequent step.

Essential in the present invention is that in the first step the steam pressure is not allowed to rise over 193 kPa as otherwise cracks in the end agglomerates cannot be avoided. After having reached a pressure of at most 193 kPa in the first step, the pressure is decreased but the agglomerates are maintained in a moist atmosphere in the autoclave. Even if the pressure in the autoclave drops to 101 kPa the agglomerates are still under moist conditions.

The pressures as given in the description and in the claims are absolute pressures, thus an absolute pressure of 193 kPa means a gauge steam pressure of 92 kPa.

In the first step the pressure is preferably increased up to 132 kPa, in the third step up to more than 203 kPa, preferably a hardening pressure which for example may vary from 912 to 2533 kPa.

In the second step the pressure in the autoclave is allowed to drop to a pressure between 111 kPa and 152 kPa, preferably about 122 kPa, which decrease in pressure is obtained by terminating the supply of steam as used for obtaining the desired steam pressure in the first step.

It has been found that in this manner it is possible to obtain hydrothermally hardened products of considerable strength which can be used as concrete aggregates, the concrete thus obtained having normal properties of strength on the one hand and a lower weight by volume on the other hand.

According to a very preferred form of this method, the product contains a filler which can react in the form of a raw material providing a chemical compound by reaction with other substances present in the product. Preferably the filler is a phosphate ore.

It is possible to work effectively with a silica-containing product having a Blaine fineness of 800 to 4500, preferably approximately 880, but even more effectively with a product containing two fractions, i.e. one with a Blaine fineness of 800 to 900 and one with a Blaine fineness of 350 to 450.

The method of the invention is also particularly suitable for the production of concrete aggregate materials (ballast in concrete) which, in addition to calcium oxyde containing and silica containing products, contain ground or unground carbon particles.

It has been shown experimentally that also other components can be included in the products.

The strength of the grains is such that products made of sand, ground sand and calcium hydroxide may be used as ballast in concrete as a substitute for gravel.

The concrete thus obtained possesses a sufficiently high compression strength but differs from the normal gravel containing concrete in that it has a lower weight by volume.

In order to produce such concrete ballast materials, ground quartz sand is mixed with quartz sand, for instance at the ratio of 30:70. Subsequently, a certain quantity of slaked lime having an active calcium oxide content of 8.5% based upon the total mixture, is added to said mixture. After mixing the calcium oxide- and silica containing components, water is added to the mixture, and the vessel containing the mixture is rotated, thus producing grains. These grains are hydrothermally hardened in an autoclave. After hardening the grains have an enormous strength which makes them suitable as ballast material for concrete.

Materials other than quartz sand can be used in granulated form for the production of concrete aggregate materials as well.

It is also possible to include in the hydrothermally cured products several other materials such as clay, sand, soot, carbon, inorganic pigments, divided metals and alloys, certain synthetic materials, ores,

2

**0 002 876**

phosphate rock, limestone, molten products, and the like. It is furthermore possible, according to the invention to utilize as ballast in concrete materials agglomerates having a small diameter, for instance clay, fine sand and other less costly materials. For such use, the granulated material can only consist of the components lime and sand or lime and clay or combinations of these two mixtures. The particle size can be adapted so as to meet the concrete-technological requirements. Also, it is possible to influence the properties of the concrete by changing the mechanical strength and weight by volume.

Thanks to their favorable mechanical properties, the products according to the invention are also adapted to contain i.a. chemical reaction components which are to partake in a chemical process. These chemical reaction components may then occur in defined quantities favorable to the chemical process. Since the product of the invention is obtained artificially, it is also possible to adapt the dimensions of the product so as to comply with particular wishes.

When performing tests with phosphate rock, it even proved possible to include the phosphate rock in the unground condition.

As the granulating quality of mixtures depends upon the amount of fine material and the amount of adhesive present among said fine material and which can only be water, the quantity of ground sand may be dispensed with in compositions wherein sufficient fine material is present.

The calcium oxide containing component as used in the products of the invention may also be cement.

However, in order to obtain the strength desired more cement than calcium hydroxide is needed.

The table below provides some figures of hardened mixtures consisting of white cement and ground quartz sand. The figures were determined by means of compressed cubes.

| % white cement | % ground sand Blaine 850 $cm^2/g$ | compression strength $kg/cm^2$ |
|---|---|---|
| 10 | 90 | 118 |
| 20 | 80 | 253 |
| 30 | 70 | 338 |
| 40 | 60 | 472 |
| 50 | 50 | 790 |
| 60 | 40 | 710 |
| 70 | 30 | 962 |
| 100 | 0 | 1,000 |

It is also possible to obtain a binding agent from grey Portland cement, while hydrothermally hardened mixtures, consisting of combinations of calcium-hydroxide cement and silica containing materials, are known from the patent literature concerning the production of aerated concrete.

Objects obtained from the sand described above and the ground sand and grey cement having the following strength.

Weighed in % of the total composition

| sand | ground sand | grey Portland cement | strength in $kg/cm^2$ |
|---|---|---|---|
| 84.9 | — | 15.1 | 184 |
| 78 | — | 22 | 433 |
| 66.93 | 7.97 | 25 | 576 |

It is possible to include various materials in the products according to the invention. The products of the invention may contain the materials to be agglomerated in various ways. They can be mixed with materials to be granulated or they can be put in a shell-like manner around the materials already granulated. Combinations of both are also possible.

The invention is illustrated by the following example.

3

# 0 002 876

## Example

4300 g of ground phosphate rock with particles smaller than 0.150 mm and the composition: CaO 51.2%, $P_2O_5$ 33.3%, $Fe_2O_3$ 0.2%, $Al_2O_3$ 0.4%, F 3.2%, $So_3$ 3.6%, $SiO_2$ 1.6%, $Co_2$ 2.4%, moisture 0.6%, is mixed with 2463 g of silica containing material (fineness according to Blaine 890 $cm^2$/gram), and 876 g of calcium hydroxide that contains approx. 69% active and approx. 72.4% total CaO. The mass is granulated while adding water. After granulating, the grains are subjected to a hydrothermal treatment in an autoclave. In this hydrothermal hardening phase the steam pressure in the autoclave is increased up to an absolute pressure of 182 kPa, whereupon the steam supply to the autoclave is terminated, causing the pressure in the autoclave to drop. After reaching a specified lower absolute pressure of 122 kPa, the steam supply to the autoclave is resumed, thus allowing the pressure to rise up to the maximum hardening pressure desired which is always higher than the pressure in the first hardening phase. Suitable absolute hardening pressures are more than 203 kPa, for example 912 and 2735. After the hardening process in the autoclave, the agglomerates have acquired a mechanical strength which is such that they can fall down several meters without breaking.

## Claims

1. Method of producing hydrothermally cured products, by reaction of a calcium oxide containing substance and a silica containing product, whether or not in the presence of a filler, by heating under steam pressure in an autoclave, in three steps, the pressure in the second step being lower than in the first step characterised in that in a first step the steam pressure in an autoclave is increased up to at most 193 kPa, whereupon in a second step the product is maintained in a moist atmosphere at a lower pressure than in the first step and subsequently in the last step the steam pressure is increased up to a steam pressure up to more than 203 kPa.

2. A method according to claim 1, characterised in that in the second step the pressure in the autoclave is caused to drop down to a pressure between 111 and 152 kPa.

3. A method according to claim 2, characterised in that in the second step the pressure is caused to decrease to approximately 122 kPa.

4. A method according to claims 1 to 3, characterized in that the pressure in the autoclave in the second step is caused to drop by terminating the steam supply.

5. A method according to one or more of claims 1 to 4, characterised in that a silica containing product having a Blaine fineness of 800 to 4500, preferably approximately 880, is used.

6. A method according to claim 5, characterised in that a silica containing product consisting of two fractions, that is, one with a Blaine fineness of 800 to 900, and one with a Blaine fineness of 350 to 450, is used.

## Revendications

1. Procédé de production de produits durcis hydrothermiquement par réaction d'une substance contenant de l'oxyde de calcium et d'un produit contenant de la silice, éventuellement en présence d'un filler, par chauffage sous pression de vapeur d'eau dans un autoclave, en trois étapes, la pression de la deuxième étape étant inférieure à celle de la première étape, caractérisé en ce que la pression de vapeur d'eau dans l'autoclave est portée jusqu'à au moins 193 kPa après quoi dans une deuxième étape le produit est maintenu en atmosphère humide à une pression inférieure à celle de la première étape et enfin dans la deuxième étape, la pression de vapeur d'eau est augmentée jusqu'à une pression d'au moins 203 kPa.

2. Procédé selon la revendication 1, caractérisé en ce que dans la deuxième étape la pression dans l'autoclave est amenée à tomber à une valeur comprise entre 111 et 152 kPa.

3. Procédé selon la revendication 2, caractérisé en ce que dans la deuxième étape la pression est amenée à tomber à une valeur d'environ 122 kPa.

4. Procédé selon une quelconque des revendications 1 à 3, caractérisé en ce que la pression dans l'autoclave au cours de la deuxième étape est réduite par arrêt de l'alimentation en vapeur.

5. Procédé selon une quelconque des revendications 1 à 4, caractérisé en ce que l'on emploie un produit contenant de la silice présentant une granulométrie Blaine de 800 à 4500, de préférence de l'ordre d'environ 880.

6. Procédé selon la revendication 5, caractérisé en ce que un produit contenant de la silice employé est formé de deux fractions, soit une fraction présentant une granulométrie Blaine de 800 à 900 et une fraction présentant une granulométrie Blaine de 350 à 450.

## Patentansprüche

1. Verfahren zur Herstellung hydrothermal gehärteter Produkte durch Reaktion einer Calciumoxid enthaltenden Substanz und eines Siliciumdioxid enthaltenden Produkts, gegebenenfalls in Anwesenheit eines Füllers, durch Erhitzen unter Dampfdruck in einem Autoklaven, in drei Stufen, wobei der Druck in der zweiten Stufe niedriger als in der ersten Stufe ist, dadurch gekennzeichnet, daß in einer

4

**0 002 876**

ersten Stufe der Dampfdruck in einem Autoklaven bis zu höchstens 193 kPa erhöht wird, worauf in einer zweiten Stufe das Produkt in einer feuchten Atmosphäre bei niedrigerem Druck als in der ersten Stufe gehalten wird, und anschließend in der letzten Stufe der Dampfdruck bis zu einem Dampfdruck von über 203 kPa erhöht wird.

2. Verfahren nach Anspruch 1, dadurch gekennzeichnet, daß in der zweiten Stufe der Druck im Autoklaven bis auf einen Druck zwischen 111 and 152 kPa fallengelassen wird.

3. Verfahren nach Anspruch 2, dadurch gekennzeichnet, daß in der zweiten Stufe der Druck auf etwa 122 kPa erniedrigt wird.

4. Verfahren nach Ansprüchen 1 bis 3, dadurch gekennzeichnet, daß der Druck in dem Autoklaven in der zweiten Stufe dadurch fallengelassen wird, daß die Dampfzufuhr beendet wird.

5. Verfahren nach einem oder mehreren der Ansprüche 1 bis 4, dadurch gekennzeichnet, daß ein Siliciumdioxid enthaltendes Produkt mit einer Blaine-Feinheit von 800 bis 4500, vorzugsweise etwa 880, verwendet wird.

6. Verfahren nach Anspruch 5, dadurch gekennzeichnet, daB ein Siliciumdioxid enthaltendes Produkt aus zwei Fraktionen, von denen eine eine Blaine-Feinheit 800 bis 900 und eine eine Blaine-Feinheit von 350 bis 450 aufweist, verwendet wird.